# EUROPÄISCHE PATENTSCHRIFT

(11) **EP 3 466 239 B1**
(45) Veröffentlichungstag und Bekanntmachung des Hinweises auf die Patenterteilung: **30.03.2022**
(21) Anmeldenummer: 18185639.4
(22) Anmeldetag: 26.07.2018
(51) Int. Cl.: A01D 41/127

(54) **VERFAHREN FÜR DEN BETRIEB EINER SELBSTFAHRENDEN LANDWIRTSCHAFTLICHEN ARBEITSMASCHINE**
METHOD FOR OPERATING A SELF-PROPELLED AGRICULTURAL WORKING MACHINE
PROCÉDÉ DE FONCTIONNEMENT D'UN ENGIN AGRICOLE AUTOMATIQUE

(30) Priorität: 29.09.2017 DE 102017122712
(43) Veröffentlichungstag der Anmeldung: 10.04.2019
(73) Patentinhaber: CLAAS Selbstfahrende Erntemaschinen GmbH, 33428 Harsewinkel (DE)
(72) Erfinder: Krause, Thilo, 39249 Glinde (DE); Korthals, Timo, 33613 Bielefeld (DE); Skiba, Andreas, 33647 Bielefeld (DE)
(74) Vertreter: CLAAS Gruppe

(56) Entgegenhaltungen:
- EP-A1- 2 368 419
- EP-A1- 3 150 056
- DE-A1-102015 116 586

## Beschreibung

Die Erfindung betrifft ein Verfahren für den Betrieb einer selbstfahrenden landwirtschaftlichen Arbeitsmaschine gemäß dem Oberbegriff von Anspruch 1 sowie eine solche selbstfahrende Arbeitsmaschine gemäß Anspruch 11.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen wie Traktoren oder dergleichen.

Bei dem Betrieb einer in Rede stehenden, selbstfahrenden landwirtschaftlichen Arbeitsmaschine kommt der sensorbasierten Überwachung des Umfelds der Arbeitsmaschine zunehmende Bedeutung zu. Dadurch, dass das Umfeld der Arbeitsmaschine nicht in standardisierter, sensorisch leicht erfassbarer Form vorliegt, sondern vielmehr im Rahmen gewisser Grenzen eine nicht deterministische Struktur aufweist, stellt die sensorbasierte Erfassung von vorbestimmten Eigenschaften des Umfelds der Arbeitsmaschine eine Herausforderung dar.

Das bekannte Verfahren (DE 10 2015 116 586 A1), von dem die Erfindung ausgeht, sieht vor, dass eine Sensoranordnung mindestens zwei Sensorsysteme aufweist, wobei eine Eigenschaft des Umfelds basierend auf den Sensorinformationen dieser mindestens zwei Sensorsysteme erfasst wird. Jede Erweiterung des Verfahrens mit zusätzlichen Sensoren erfordert eine sensorspezifische Anpassung der Methodik zur Erfassung der jeweiligen, vorbestimmten Eigenschaft des Umfelds, was steuerungstechnisch aufwändig ist.

Der Erfindung liegt das Problem zugrunde, das bekannte Verfahren derart auszugestalten und weiterzubilden, dass eine Skalierung des Verfahrens auf unterschiedlichen Sensoren mit geringem Aufwand, insbesondere mit geringer Rechenleistung, möglich ist.

Das obige Problem wird bei einem Verfahren gemäß dem Oberbegriff von Anspruch 1 durch die Merkmale des kennzeichnenden Teils von Anspruch 1 gelöst.

Wesentlich ist zunächst einmal die grundsätzliche Überlegung, dass datentechnisch mindestens eine Evidenzkarte definiert ist, der eine das Umfeld der Arbeitsmaschine charakterisierende Evidenzkarten-Eigenschaft zugeordnet ist, und dass in der Evidenzkarte der relevante Umfeldbereich der Arbeitsmaschine mittels einer Gitterebene aus Gitterelementen abgebildet ist. Der Begriff "datentechnisch" bedeutet vorliegend, dass die Evidenzkarte einem Datenmodell entspricht und dass die Evidenzkarte nicht notwendigerweise über eine Mensch-Maschine-Schnittstelle dargestellt sein muss.

Mit der Evidenzkarte liegt der relevante Umfeldbereich der Arbeitsmaschine in standardisierter Form vor, indem der relevante Umfeldbereich mittels der Gittereben aus Gitterelementen abgebildet ist. Dabei ist es vorzugsweise so, dass die Gitterebene horizontal ausgerichtet ist, wobei die Oberfläche des relevanten Umfeldbereichs beispielsweise in Parallelprojektion auf die Gitterebene projiziert ist, so dass die Gitterebene insoweit eine Repräsentation der Oberfläche des relevanten Umfeldbereichs bereitstellt. Andere Arten der Abbildung der Oberfläche des relevanten Umfeldbereichs auf die Gitterebene sind denkbar. Dabei kann die Gitterebene eine Ebene im engeren Sinne sein und eine plane Erstreckung aufweisen, oder von einer planen Erstreckung abweichen und beispielsweise auf den Verlauf der Oberfläche des relevanten Umfeldbereichs angepasst sein.

Vorschlagsgemäß ist es weiter vorgesehen, dass aus den Sensorinformationen mindestens zweier Sensorsysteme jeweils für sich genommen sensorspezifische Auftrittswahrscheinlichkeiten für das Vorliegen der Evidenzkarten-Eigenschaft in den Gitterelementen der Evidenzkarte ermittelt werden. Der Hintergrund hierfür besteht darin, dass das Vorliegen der jeweiligen Evidenzkarten-Eigenschaft aus den Sensorinformationen eines Sensorsystems grundsätzlich mit einer gewissen Unsicherheit behaftet ist. Ursächlich hierfür ist einerseits die oben angesprochene, wenig deterministische Struktur des Umfelds und andererseits die Charakteristik des jeweiligen Sensorsystems. Eine Abschätzung der Auftrittswahrscheinlichkeit für das Vorliegen der Evidenzkarten-Eigenschaft in den Gitterelementen kann beispielsweise auf Einlernvorgänge zurückgehen. Unter Berücksichtigung der Tatsache, dass für das Vorliegen der Evidenzkarten-Eigenschaft aus den Sensorinformationen eines Sensorsystems lediglich eine Auftrittswahrscheinlichkeit mit der verbleibenden Restunsicherheit ermittelbar ist, erscheint es sachgerecht, die betreffende Auftrittswahrscheinlichkeit für jedes Gitterelement nicht nur für ein Sensorsystem, sondern für zwei oder mehrere Sensorsysteme zu ermitteln. Es liegen also für jedes Gitterelement je nach Anzahl beteiligter Sensorsysteme mindestens zwei sensorspezifische Auftrittswahrscheinlichkeiten vor, aus denen eine resultierende Auftrittswahrscheinlichkeit für das jeweilige Gitterelement zu ermitteln ist. Hierfür ist ein Sensorfusionsmodul vorgesehen, das für die Gitterelemente der Evidenzkarte jeweils aus den sensorspezifischen Auftrittswahrscheinlichkeiten die resultierende Auftrittswahrscheinlichkeit für das jeweilige Gitterelement ermittelt.

Mit dem vorschlagsgemäßen Verfahren ist die Erfassung vorbestimmter Eigenschaften des relevanten Umfeldbereichs basierend auf den Sensorinformationen mehrerer Sensorsysteme auf einfache Weise und mit geringer Rechenleistung möglich. Dies weil das relevante Umfeld vereinfacht mit Gitterelementen abgebildet ist, denen jeweils sensorspezifische Auftrittswahrscheinlichkeiten der Sensorsysteme zugeordnet sind, die wiederum zu der resultierenden Auftrittswahrscheinlichkeit für das jeweilige Gitterelement verrechnet werden können. Durch eine geeignete Auslegung des Sensorfusionsmoduls spielt es keine Rolle, wie viele Sensorsysteme und, insbesondere, welche Arten von Sensorsystemen, jeweils eine sensorspezifische Auftrittswahrscheinlichkeit für ein betreffendes Gitterelement liefern. Das vorschlagsgemäße Verfahren ist daher geeignet, mit geringem Aufwand auf eine beliebige Anzahl verschiedener Sensorsysteme skaliert zu werden.

Die obige Skalierung ist insbesondere bei selbstfahrenden landwirtschaftlichen Arbeitsmaschinen von großer Bedeutung. Denn je nach Art und Ausstattung der Arbeitsmaschine kann eine unterschiedliche Bestückung der Arbeitsmaschine mit Sensorsystemen vorgesehen sein. Ferner ermöglicht das vorschlagsgemäße Verfahren die problemlose Nachrüstung der Arbeitsmaschine mit einem Sensorsystem oder mehreren Sensorsystemen, ohne dass dies zu übermäßigen steuerungstechnischen Aufwänden führt.

Die Erstellung einer obigen Evidenzkarte mittels einer obigen Gitterebene aus Gitterelementen, denen jeweils eine resultierende Auftrittswahrscheinlichkeit zugeordnet sind, wird im Bereich der mobilen Roboter auch unter dem Begriff "certainty grids" zusammengefasst (sensor fusion in certainty grids for mobile robots, Hans P. Moravec, AI Magazine Vol. 9, Number 2 (1988), AAAl).

Bei der Ausgestaltung gemäß Anspruch 2 sind mindestens zwei Evidenzkarten definiert, denen jeweils eine das Umfeld der Arbeitsmaschine charakterisierende Evidenzkarten-Eigenschaft zugeordnet sind. Mit der vorschlagsgemäßen Lösung ist es also möglich, das Umfeld der Arbeitsmaschine sensorbasiert im Hinblick auf mehrere Evidenzkarten-Eigenschaften hin zu überprüfen, und zwar mit ein und derselben Methodik. Dies bedeutet, dass das vorschlagsgemäße Verfahren auch im Hinblick auf den Überprüfungsumfang mit geringem Aufwand möglich ist.

Die weiter bevorzugten Ausgestaltungen gemäß den Ansprüchen 3 und 4 sehen vor, dass mindestens zwei der Sensorsysteme unterschiedliche physikalische Eigenschaften des relevanten Umfelds der Arbeitsmaschine erfassen. Das ist die Grundlage dafür, dass die resultierende Auftrittswahrscheinlichkeit für ein Gitterelement möglichst deutlich von dem Wert 0,5 abweicht.

Vorteilhaft für die vorschlagsgemäße Sensorfusion ist eine entsprechende Überlappung der Erfassungsbereiche der Sensorsysteme gemäß Anspruch 5. Dabei kann es grundsätzlich vorgesehen sein, dass die Überlappung der Sensorsysteme nur für einen Teil der Gitterelemente der Gitterebene vorgesehen ist.

Für die Evidenzkarten-Eigenschaft, die der jeweiligen Evidenzkarte zugeordnet ist, sind ganz verschiedene Möglichkeiten denkbar. Gemäß Anspruch 6 ist die Evidenzkarten-Eigenschaft einer Evidenzkarte beispielsweise durch die Existenz zu erntenden Gutbestands definiert. Denkbar ist auch, dass die Evidenzkarte-Eigenschaft einer Evidenzkarte durch die Existenz eines lebenden oder eines nicht lebenden Hindernisses definiert ist. Andere Möglichkeiten der Definition der Evidenzkarten-Eigenschaft sind in Anspruch 6 in nicht abschließender Form genannt.

Die Ermittlung der sensorspezifischen Auftrittswahrscheinlichkeiten für die Gitterelemente wird für ein bildgebendes Sensorsystem im Folgenden beispielhaft erläutert:
Die Sensorinformationen des betreffenden Sensorsystems entsprechen hier Bildern des relevanten Umfeldbereichs der Arbeitsmaschine. Die Bilder werden zunächst segmentiert, was beispielsweise basierend auf der Farbverteilung über das jeweilige Bild vorgenommen werden kann. Es schließt sich eine Klassifizierung der resultierenden Segmente an, die Aufschluss darüber gibt, ob das jeweilige Segment die betreffende Evidenzkarten-Eigenschaft repräsentiert oder nicht. Hinsichtlich bevorzugter Verfahren zur Segmentierung und Klassifizierung wird auf die deutsche Patentanmeldung DE 10 2016 118 227.3 verwiesen, die auf die Anmelderin zurückgeht. Möglichkeiten zur Übertragung der klassifizierten Segmente in eine oben angesprochene Gitterebene, die dort auch als "occupancy grid" bezeichnet wird, kann ebenfalls der obigen Anmeldung entnommen werden.

Die Auftrittswahrscheinlichkeit für die Gitterelemente, denen durch Klassifizierung schon eine Evidenzkarten-Eigenschaft zugeordnet ist, kann im einfachsten Fall aus der Empfindlichkeit des betreffenden Sensorsystems über die den relevanten Umfeldbereich repräsentierende Gitterebene abgeleitet werden. Für die Gitterelemente, in denen die betreffende Evidenzkarten-Eigenschaft nach der Klassifizierung vorliegt, wird die Auftrittswahrscheinlichkeit je nach ortsabhängiger Empfindlichkeit des Sensorsystems in dem betreffenden Gitterelement gesetzt.

Andere Möglichkeiten der Festlegung der Auftrittswahrscheinlichkeit sind denkbar. Grundsätzlich kann es vorteilhaft sein, die Auftrittswahrscheinlichkeit schon im Rahmen der Klassifizierung, also vor der Übertragung der klassifizierten Segmente in die Gitterebene, für die einzelnen Gitterelemente zu ermitteln.

Für die Verrechnung der sensorspezifischen Auftrittswahrscheinlichkeiten in die resultierende Auftrittswahrscheinlichkeit sind verschiedene mathematische Ansätze denkbar. Ein aus dem Bereich der mobilen Roboter bekannter Ansatz ist der Bayessche Ansatz zur statistischen Datenanalyse, der die Sensorfusion mit geringem Rechenaufwand und insbesondere skalierbar im Hinblick auf die Erweiterung auf mehrere Sensorsysteme ermöglicht (sensor fusion in certainty grids for mobile robots, Hans P. Moravec, AI Magazine Vol. 9, Number 2 (1988), AAAI).

Bei der weiter bevorzugten Ausgestaltung gemäß Anspruch 8 wird zumindest ein Teil der Evidenzkarten in einer Schlagdatenbank gespeichert. Dabei ist es vorzugsweise so, dass nur solche Evidenzkarten in der Schlagdatenbank gespeichert werden, die statische Evidenzkarten-Eigenschaften betreffen. Damit ist es auf einfache Weise möglich, solche Evidenzkarten von der Speicherung in der Schlagdatenbank auszuklammern, die beispielsweise lebende Hindernisse betreffen.

Die weiter bevorzugten Ausgestaltungen gemäß den Ansprüchen 9 und 10 betreffen vorteilhafte Steueraktionen des Fahrerassistenzsystems. Beispielsweise kann es gemäß Anspruch 9 vorgesehen sein, dass eine Steueraktion die Ausgabe der Evidenzkarten über die Mensch-Maschine-Schnittstelle des Fahrerassistenzsystems ist. Alternativ oder zusätzlich kann in Abhängigkeit vom Dateninhalt der Evidenzkarte die Ausgabe einer Warnmeldung über die Mensch-Maschine-Schnittstelle vorgesehen sein. Die Anzeige der Gitterelemente der Gitterebene, die je nach Auftrittswahrscheinlichkeit von unterschiedlicher Farbgestaltung sein können, stellt dem Benutzer eine vereinfachte und damit leicht interpretierbare Darstellung über die Eigenschaften des relevanten Umfelds zur Verfügung.

Bei der ebenfalls bevorzugten Ausgestaltung gemäß Anspruch 10 führt das Fahrerassistenzsystem selbsttätig eine Notroutine durch, sofern ein Hindernis mit einer Auftrittswahrscheinlichkeit, die oberhalb einer Grenz-Auftrittswahrscheinlichkeit liegt, im zukünftigen Fahrweg der Arbeitsmaschine erfasst wird. Im einfachsten Fall handelt es sich bei der Notroutine um eine Stopproutine zum Anhalten der Arbeitsmaschine. Dadurch, dass die vorschlagsgemäße Sensorfusion eine relativ hohe Sicherheit bei der Erfassung von Evidenzkarten-Eigenschaften, insbesondere von Hindernissen, ermöglicht, ist die selbsttätige Durchführung der Notroutine mit einer beträchtlichen Steigerung der Betriebssicherheit der Arbeitsmaschine verbunden.

Nach einer weiteren Lehre gemäß Anspruch 11, der eigenständige Bedeutung zukommt, wird eine selbstfahrende landwirtschaftliche Arbeitsmaschine als solche zur Durchführung eines vorschlagsgemäßen Verfahrens beansprucht. Auf alle Ausführungen, die geeignet sind, die Arbeitsmaschine als solche zu beschreiben, darf verwiesen werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße selbstfahrende landwirtschaftliche Arbeitsmaschine in einer Ansicht von oben,
- Fig. 2: das Fahrerassistenzsystem der Arbeitsmaschine gemäß Fig. 1 in einer ganz schematischen Darstellung und
- Fig. 3: einen beispielhaften Ablauf einer vorschlagsgemäßen Sensorfusion bei einer Arbeitsmaschine gemäß Fig. 1.

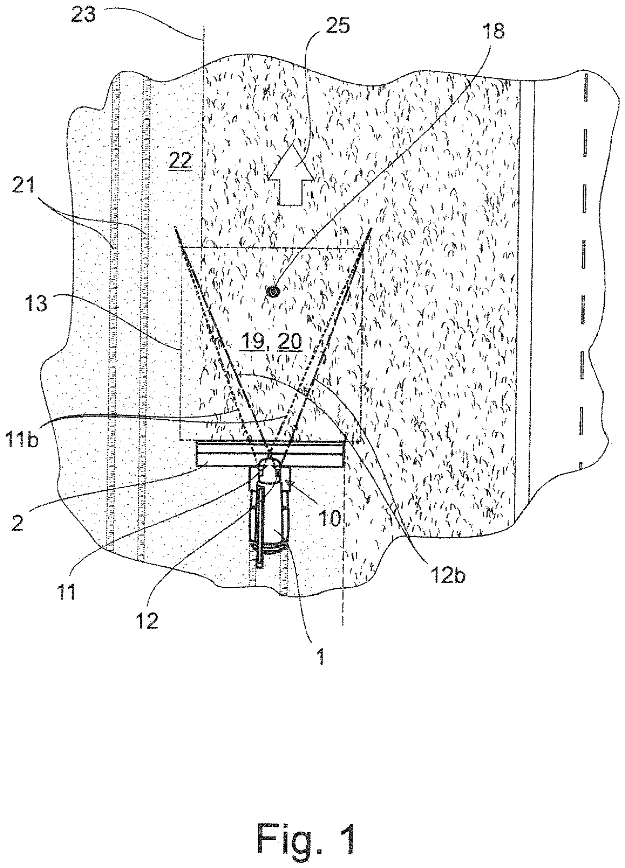

Die vorschlagsgemäße Lösung lässt sich auf einen weiten Bereich selbstfahrender landwirtschaftlicher Arbeitsmaschinen anwenden. Dazu gehören Mähdrescher, Feldhäcksler, Zugmaschinen, insbesondere Traktoren, oder dergleichen. Bei dem dargestellten und insoweit bevorzugten Ausführungsbeispiel handelt es sich bei der Arbeitsmaschine 1 um einen Mähdrescher, der in an sich üblicher Weise mit einem Vorsatzgerät 2 ausgestattet ist. Fig. 1 zeigt die Arbeitsmaschine 1 von oben während des Ernteprozesses.

Die vorschlagsgemäße Arbeitsmaschine 1 ist mit mindestens einem Arbeitsorgan 3-8 ausgestattet. Eine als Mähdrescher ausgestaltete Arbeitsmaschine 1 weist vorzugsweise die Arbeitsorgane Fahrantrieb 3, Schneidwerk 4, Dreschwerk 5, Abscheidevorrichtung 6, Reinigungsvorrichtung 7 und Verteilvorrichtung 8 auf.

Die Arbeitsmaschine 1 ist ferner mit einem Fahrerassistenzsystem 9 zum Erzeugen von Steueraktionen innerhalb der Arbeitsmaschine 1 ausgestattet. Die Steueraktionen können einerseits die Anzeige von Informationen für den Benutzer und andererseits die Ansteuerung und Parametrierung der Arbeitsorgane 3-8 betreffen.

Weiter ist der Arbeitsmaschine 1 eine Sensoranordnung 10 zur Erzeugung von Umfeldinformationen zugeordnet, wobei das Fahrerassistenzsystem 9 die Steueraktionen basierend auf den Umfeldinformationen erzeugt.

Die Sensoranordnung 10 weist mindestens zwei Sensorsysteme 11, 12 auf, die jeweils Sensorinformationen zu einem vorbestimmten, relevanten Umfeldbereich 13 der Arbeitsmaschine 1, der auch als "region of interest" bezeichnet wird. Hier und vorzugsweise ist es so, dass der relevante Umfeldbereich 13 der Arbeitsmaschine 1 relativ zu der Arbeitsmaschine 1 definiert ist und entsprechend mit der Arbeitsmaschine 1 mitläuft.

Wesentlich ist nun zunächst, dass datentechnisch mindestens eine Evidenzkarte 14, 15, 16 definiert ist, der eine das Umfeld der Arbeitsmaschine 1 charakterisierende Evidenzkarten-Eigenschaft zugeordnet ist. Eine solche Evidenzkarten-Eigenschaft ist beispielsweise als die Existenz eines Hindernisses definiert.

In der obigen Evidenzkarte 14, 15, 16 ist der relevante Umfeldbereich 13 der Arbeitsmaschine 1 mittels einer Gitterebene P aus Gitterelementen E abgebildet. Die jeweilige Gitterebene P repräsentiert also den relevanten Umfeldbereich 13 der Arbeitsmaschine 1. Grundsätzlich kann die Gitterebene P horizontal angeordnet sein, wobei die Gitterebene P mit der Oberfläche des relevanten Umfeldbereichs 13 über eine einfache Parallelprojektion korrespondiert. Dies bedeutet, dass jedes Gitterelement E der Gitterebene P einem entsprechenden Teilbereich des relevanten Umfeldbereichs 13 entspricht.

Wesentlich ist weiter, dass aus den Sensorinformationen mindestens zweier Sensorsysteme 11, 12 jeweils für sich genommen sensorspezifische Auftrittswahrscheinlichkeiten für das Vorliegen der Evidenzkarten-Eigenschaft in den Gitterelementen E der Evidenzkarte 14, 15, 16 ermittelt werden. Die Auftrittswahrscheinlichkeit ist hier und vorzugsweise als Zahlenwert im Bereich 0 und 1 definiert, wobei 0 für die kleinste Wahrscheinlichkeit und 1 die größte Wahrscheinlichkeit steht.

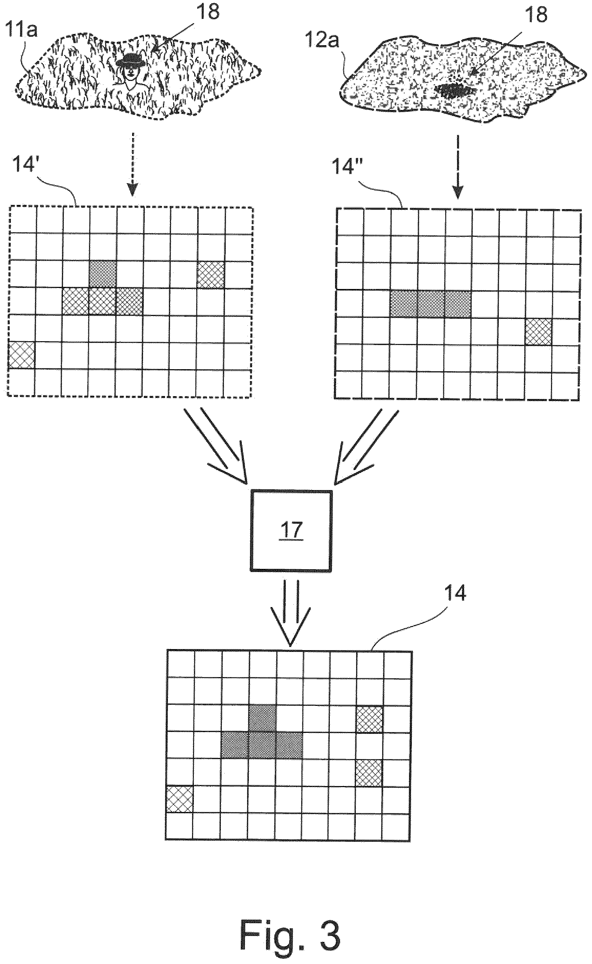

Dies ist beispielhaft für eine Evidenzkarte 14 der Darstellung gemäß Fig. 3 am Beispiel der Evidenzkarten-Eigenschaft, die als die Existenz eines lebenden Hindernisses definiert ist, dargestellt. In Fig. 3 zeigt das oberste linke Bild die Sensorinformationen 11a des Sensorsystems 11, das hier und vorzugsweise einen Kamera-Sensor aufweist. Das oberste rechte Bild in Fig. 3 zeigt die Sensorinformationen 12a des Sensorsystems 12, das hier und vorzugsweise einen LIDAR-Sensor aufweist. Beide Sensorinformationen 11a, 12a repräsentieren einen Teil des relevanten Umfeldbereichs 13, in dem ein lebendes Hindernis 18, hier eine Person, dargestellt ist.

Den Sensorinformationen 11a, 12a sind jeweils eine vorläufige Evidenzkarte 14', 14" zugeordnet, in denen jeweils die sensorspezifischen Auftrittswahrscheinlichkeiten eingetragen sind. Die Auftrittswahrscheinlichkeiten werden hier generell durch die Dichte der jeweiligen Schraffierung repräsentiert, wobei die Auftrittswahrscheinlichkeit von 0 einer weißen Fläche und eine Auftrittswahrscheinlichkeit von 1 einer schwarzen Fläche entspricht. Dabei wird deutlich, dass das kamerabasierte Sensorsystem 11 den Hut der Person aufgrund dessen hohen Kontrasts relativ zur Umgebung mit hoher Auftrittswahrscheinlichkeit als Hindernis erfasst, während das LIDAR-basierte Sensorsystem 12 die Schultern der Person 18 mit hoher Auftrittswahrscheinlichkeit als Hindernis erfasst. Das Sensorfusionsmodul 17 verrechnet die beiden vorläufigen Evidenzkarten 14', 14" zu einer resultierenden Evidenzkarte 14, die in Fig. 3 unten dargestellt ist.

Für die Ermittlung der jeweils resultierenden Auftrittswahrscheinlichkeiten sind ganz unterschiedliche Methoden denkbar. Im Sinne eines einfachen Beispiels ist es bei dem in Fig. 3 und insoweit bevorzugten Ausführungsbeispiel so, dass das Sensorfusionsmodul 17 für jedes Gitterelement E die sensorspezifische Auftrittswahrscheinlichkeit der resultierenden Auftrittswahrscheinlichkeit gleichsetzt, die die höchste Abweichung vom Wert 0,5 aufweist und damit die sicherste Aussage darüber, ob die Evidenzkarten-Eigenschaft vorliegt oder nicht, gibt. Eine andere bevorzugte Variante für die Erfassung der resultierenden Auftrittswahrscheinlichkeiten wird weiter unten gegeben.

Hier und vorzugsweise ist die Gitterebene P wie oben angesprochen horizontal ausgerichtet und von einer ebenen Erstreckung, wobei alle Gitterelemente E jeweils von identischer Form und Größe sind. Der Zusammenhang zwischen der Gitterebene P und der Oberfläche des relevanten Umfeldbereichs 13 ergibt sich hier und vorzugsweise durch Parallelprojektion.

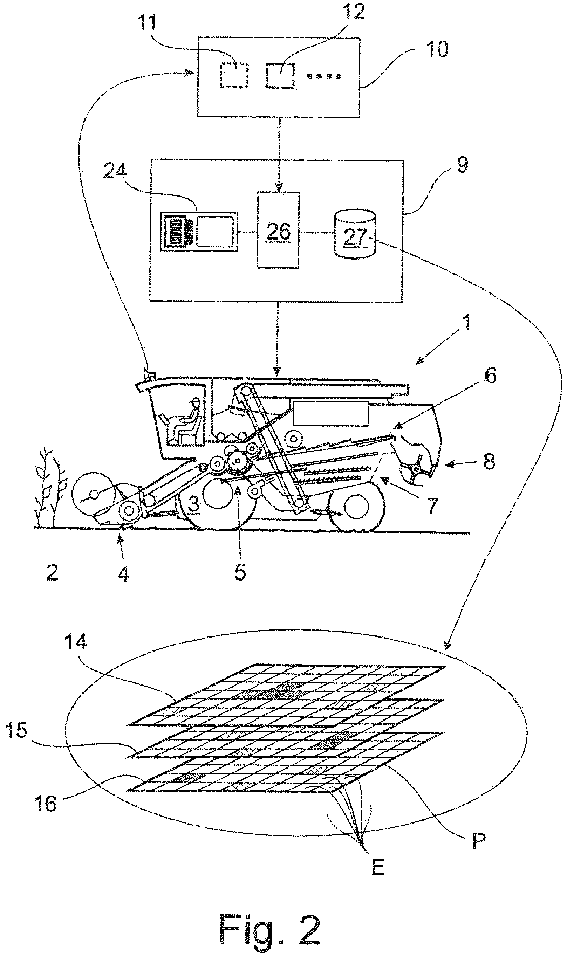

Fig. 2 zeigt beispielhaft, dass hier und vorzugsweise mindestens zwei Evidenzkarten 14, 15, 16, hier und vorzugsweise sogar mehr als zwei Evidenzkarten 14, 15, 16, definiert sind, denen jeweils eine das Umfeld der Arbeitsmaschine 1 charakterisierende Evidenzkarten-Eigenschaft zugeordnet ist. Grundsätzlich kann es auch vorgesehen sein, dass mehr als drei Evidenzkarten 14, 15, 16 vorgesehen sind, denen jeweils eine das Umfeld der Arbeitsmaschine 1 charakterisierende Evidenzkarten-Eigenschaft zugeordnet ist.

Um eine besonders geringe Unsicherheit bei der Erfassung der jeweiligen Evidenzkarten-Eigenschaft zu gewährleisten, ist es vorzugsweise so, dass mindestens zwei der Sensorsysteme 11, 12 unterschiedliche physikalische Eigenschaften des relevanten Umfeldbereichs 13 der Arbeitsmaschine 1 erfassen. Hier und vorzugsweise ist es entsprechend so, dass ein erstes Sensorsystem 11 der Sensoranordnung 10 mindestens einen Kamera-Sensor, hier und vorzugsweise einen Farbbildkamera-Sensor, umfasst und dass ein zweites Sensorsystem 11 der Sensoranordnung 10 mindestens einen LIDAR-Sensor, insbesondere einen laserbasierten LIDAR-Sensor, umfasst. Andere Sensorsysteme 11, 12 sind grundsätzlich anwendbar.

In besonders bevorzugter Ausgestaltung ist es vorgesehen, dass sich die Erfassungsbereiche 11b, 12b zumindest eines Teils der Sensorsysteme 11, 12 für mindestens einen Teil der Gitterelemente E der Gitterebene P überlappen. Für ein Gitterelement E bedeutet dies, dass die betreffenden Sensorsysteme 11, 12 jeweils den Teil des relevanten Umfeldbereichs 13 erfassen, der zu dem betreffenden Gitterelement E korrespondiert.

Die Evidenzkarten-Eigenschaft einer Evidenzkarte 14, 15, 16 kann ganz unterschiedliche Eigenschaften des Umfelds der Arbeitsmaschine 1 betreffen. In einer Variante ist die Evidenzkarten-Eigenschaft einer Evidenzkarte durch die Existenz zu erntenden Gutbestands 19 definiert. Alternativ oder zusätzlich kann es vorgesehen sein, dass die Evidenzkarten-Eigenschaft einer Evidenzkarte 14, 15, 16 durch die Existenz stehenden Gutbestands 20 definiert ist. Alternativ oder zusätzlich kann es vorgesehen sein, dass die Evidenzkarten-Eigenschaft einer Evidenzkarte 14, 15, 16 durch die Existenz eines lebenden Hindernisses 18 definiert ist, wie in den Fig. 1 und 3 gezeigt. Alternativ oder zusätzlich kann es vorgesehen sein, dass die Evidenzkarten-Eigenschaft einer Evidenzkarte 14, 15, 16 durch die Existenz eines nicht lebenden Hindernisses definiert ist. Alternativ oder zusätzlich kann es vorgesehen sein, dass die Evidenzkarten-Eigenschaft einer Evidenzkarte 14, 15, 16 durch die Existenz einer Fahrgasse 21 definiert ist. Alternativ oder zusätzlich kann es vorgesehen sein, dass die Evidenzkarten-Eigenschaft einer Evidenzkarte 14, 15, 16 durch die Existenz eines abgeernteten Bereichs 22 definiert ist. Alternativ oder zusätzlich kann es vorgesehen sein, dass die Evidenzkarten-Eigenschaft einer Evidenzkarte 14, 15, 16 durch die Existenz einer Bestandskante 23 definiert ist.

Es wurde schon darauf hingewiesen, dass die Methodik für die Ermittlung der resultierenden Auftrittswahrscheinlichkeiten je nach Anwendungsfall unterschiedlich sein kann. In einer besonders bevorzugten Ausgestaltung ist es vorgesehen, dass das Sensorfusionsmodul 17 die den Gitterelementen E jeweils zugeordneten, resultierenden Auftrittswahrscheinlichkeiten aus den sensorspezifischen Auftrittswahrscheinlichkeiten basierend auf dem bekannten Bayesschen Ansatz zur statistischen Datenanalyse erzeugt (sensor fusion in certainty grids for mobile robots, Hans P. Moravec, AI Magazine Vol. 9, Number 2 (1988), AAAI).

Auch für die Verwendung der resultierenden Auftrittswahrscheinlichkeiten sind ganz unterschiedliche vorteilhafte Varianten denkbar. Für den Fall, dass für den relevanten Umfeldbereich 13 eine Schlagdatenbank definiert ist, die eine Mehrzahl von den relevanten Umfeldbereich 13 definierenden Schlagdaten aufweist, ist es vorzugsweise vorgesehen, dass ein Teil der Evidenzkarten 14, 15, 16 in der Schlagdatenbank gespeichert wird. Dies betrifft insbesondere solche Evidenzkarten 14, 15, 16, deren zugeordnete Evidenzkarten-Eigenschaften statischen Charakter aufweisen. Dies wurde weiter oben bereits angesprochen.

Das Fahrerassistenzsystem 9 kann die resultierenden Auftrittswahrscheinlichkeiten in unterschiedlicher Weise verwenden. Vorzugsweise ist es vorgesehen, dass das Fahrerassistenzsystem 9 eine Mensch-Maschine-Schnittstelle 24 aufweist, wobei eine Steueraktion die Ausgabe der Evidenzkarten 14, 15, 16 über die Mensch-Maschine-Schnittstelle 24 ist. Alternativ oder zusätzlich kann es vorgesehen sein, dass in Abhängigkeit vom Dateninhalt der Evidenzkarte 14, 15, 16 die Ausgabe einer Warnmeldung über die Mensch-Maschine-Schnittstelle 24 als Steueraktion ausgegeben wird.

Bei einem höheren Automatisierungsgrad der Arbeitsmaschine 1 ist es denkbar, dass für den Fall, dass die Evidenzkarte 14, 15, 16 im zukünftigen Fahrweg 25 der Arbeitsmaschine 1 ein Hindernis mit einer Auftrittswahrscheinlichkeit, die oberhalb einer Grenz-Auftrittswahrscheinlichkeit liegt, aufweist, die Steueraktion des Fahrerassistenzsystems 9 die Durchführung einer Notroutine ist. Bei dieser Notroutine kann es sich um eine Stopproutine zum Anhalten der Arbeitsmaschine 1 und/oder um eine Ausweichroutine zum Ausweichen der Arbeitsmaschine 1 vordem Hindernis handeln.

Nach einer weiteren Lehre, der eigenständige Bedeutung zukommt, wird die selbstfahrende landwirtschaftliche Arbeitsmaschine 1 zur Durchführung eines oben erläuterten, vorschlagsgemäßen Verfahrens als solche beansprucht. Auf alle diesbezüglichen Ausführungen darf verwiesen werden.

In besonders bevorzugter Ausgestaltung ist es vorgesehen, dass das Fahrerassistenzsystem 9 eine Rechenvorrichtung 26 aufweist, die die oben beschriebene Ermittlung der sensorspezifischen Auftrittswahrscheinlichkeiten für das Vorliegen der jeweiligen Evidenzkarten-Eigenschaft in den Gitterelementen E der jeweiligen Evidenzkarte 14, 15, 16 übernimmt. Alternativ oder zusätzlich kann es vorgesehen sein, dass das Sensorfusionsmodul 17, das die Ermittlung der resultierenden Auftrittswahrscheinlichkeiten für die jeweiligen Gitterelemente E übernimmt, ebenfalls von dem Fahrerassistenzsystem 9 der Arbeitsmaschine 1, insbesondere von der Rechenvorrichtung 26, bereitgestellt wird. Weiter alternativ oder zusätzlich kann es vorgesehen sein, dass die vorläufigen Evidenzkarten sowie die resultierenden Evidenzkarten 14, 15, 16 in einem Speicher 27 des Fahrerassistenzsystems 9 gespeichert sind.

Alternativ ist es denkbar, dass die Berechnung der provisorischen Evidenzkarten sowie der resultierenden Evidenzkarten 14, 15, 16, insbesondere das Sensorfusionsmodul 17, auf einem Rechner realisiert sind, der separat von der Arbeitsmaschine 1, insbesondere bei einem Lohndienstleister oder dergleichen, betrieben wird.

Zusammenfassend lässt sich feststellen, dass die zu verarbeitende Datenmenge bei der Erfassung von Eigenschaften des relevanten Umfeldbereichs 13 durch die Abbildung des relevanten Umfeldbereichs 13 durch die vorschlagsgemäßen Gitterebenen reduziert wird. Es ist nun möglich, diese Erfassung auch während der Fahrbewegung der Arbeitsmaschine 1, vorzugsweise in Echtzeit, durchzuführen, indem die Aktualisierung der Evidenzkarten 14,15,16 entsprechend des mitlaufenden relevanten Umfeldbereichs 13 mit vergleichsweise geringer Rechenleistung laufend, insbesondere zyklisch, vorgenommen wird.

### Bezugszeichenliste

- 1: Arbeitsmaschine
- 2: Vorsatzgerät
- 3: Fahrantrieb
- 4: Schneidwerk
- 5: Dreschwerk
- 6: Abscheidevorrichtung
- 7: Reinigungsvorrichtung
- 8: Verteilvorrichtung
- 9: Fahrerassistenzsystem
- 10: Sensoranordnung
- 11, 12: Sensorsysteme
- 11a, 12a: Sensorinformationen
- 13: Umfeldbereich
- 14, 14', 15, 16: Evidenzkarte
- 17: Sensorfusionsmodul
- 18: Person, Hindernis
- 19, 20: Gutbestand
- 21: Fahrgasse
- 22: Bereich
- 23: Bestandskante
- 24: Mensch-Maschine-Schnittstelle
- 25: Fahrweg
- 26: Rechenvorrichtung
- 27: Speicher
- E: Gitterelement
- P: Gitterebene

## Patentansprüche

1. Verfahren für den Betrieb einer selbstfahrenden landwirtschaftlichen Arbeitsmaschine (1) mit mindestens einem Arbeitsorgan (3-8) und mit einem Fahrerassistenzsystem (9) zum Erzeugen von Steueraktionen innerhalb der Arbeitsmaschine (1), wobei eine Sensoranordnung (10) zur Erzeugung von Umfeldinformationen vorgesehen ist, wobei das Fahrerassistenzsystem (9) die Steueraktionen basierend auf den Umfeldinformationen erzeugt, wobei die Sensoranordnung (10) mindestens zwei Sensorsysteme (11, 12) aufweist, die jeweils Sensorinformationen zu einem vorbestimmten, relevanten Umfeldbereich (13) der Arbeitsmaschine (1) erzeugen,
**dadurch gekennzeichnet,**
**dass** datentechnisch mindestens eine Evidenzkarte (14, 15, 16) definiert ist, der eine das Umfeld der Arbeitsmaschine (1) charakterisierende Evidenzkarten-Eigenschaft zugeordnet ist, dass in der Evidenzkarte (14, 15, 16) der relevante Umfeldbereich (13) der Arbeitsmaschine (1) mittels einer Gitterebene (P) aus Gitterelementen (E) abgebildet ist,
**dass** aus den Sensorinformationen mindestens zweier Sensorsysteme (11, 12) jeweils für sich genommen sensorspezifische Auftrittswahrscheinlichkeiten für das Vorliegen der Evidenzkarten-Eigenschaft in den Gitterelementen (E) der Evidenzkarte (14, 15, 16) ermittelt werden,
und **dass** ein Sensorfusionsmodul (17) vorgesehen ist, das für die Gitterelemente (E) der Evidenzkarte (14, 15, 16) jeweils aus den sensorspezifischen Auftrittswahrscheinlichkeiten eine resultierende Auftrittswahrscheinlichkeit für das jeweilige Gitterelement (E) ermittelt.

2. Verfahren nach Anspruch 1, **dadurch gekennzeichnet, dass** mindestens zwei Evidenzkarten (14, 15, 16) definiert sind, denen jeweils eine das Umfeld der Arbeitsmaschine (1) charakterisierende Evidenzkarten-Eigenschaft zugeordnet sind, vorzugsweise mehr als drei Evidenzkarten (14, 15, 16) vorgesehen sind, denen jeweils eine das Umfeld der Arbeitsmaschine (1) charakterisierende Evidenzkarten-Eigenschaft zugeordnet sind.

3. Verfahren nach Anspruch 1 oder 2, **dadurch gekennzeichnet, dass** mindestens zwei der Sensorsysteme (11, 12) unterschiedliche physikalische Eigenschaften des relevanten Umfeldbereichs der Arbeitsmaschine (1) erfassen.

4. Verfahren nach einem der vorhergehenden Ansprüche, **dadurch gekennzeichnet, dass** ein erstes Sensorsystem (11) der Sensoranordnung (10) mindestens einen Kamera-Sensor, insbesondere einen Farbbildkamera-Sensor, umfasst und dass ein zweites Sensorsystem (12) der Sensoranordnung (10) einen LIDAR-Sensor, insbesondere einen laserbasierten LIDAR-Sensor, umfasst.

5. Verfahren nach einem der vorhergehenden Ansprüche, **dadurch gekennzeichnet, dass** sich die Erfassungsbereiche (11b, 12b) zumindest eines Teils der Sensorsysteme (11, 12) für mindestens einen Teil der Gitterelemente (E) der Gitterebene (P) überlappen.

6. Verfahren nach einem der vorhergehenden Ansprüche, **dadurch gekennzeichnet, dass** die Evidenzkarten-Eigenschaft einer Evidenzkarte (14, 15, 16) durch die Existenz zu erntenden Gutbestands (19) definiert ist, und/oder, dass die Evidenzkarten-Eigenschaft einer Evidenzkarte (14, 15, 16) durch die Existenz stehenden Gutbestands (20) definiert ist, und/oder, dass die Evidenzkarten-Eigenschaft einer Evidenzkarte (14, 15, 16) durch die Existenz eines lebenden Hindernisses (18) definiert ist, und/oder dass die Evidenzkarten-Eigenschaft einer Evidenzkarte (14, 15, 16) durch die Existenz eines nicht lebenden Hindernisses definiert ist, und/oder, dass die Evidenzkarten-Eigenschaft einer Evidenzkarte (14, 15, 16) durch die Existenz einer Fahrgasse (21) definiert ist, und/oder, dass die Evidenzkarten-Eigenschaft einer Evidenzkarte (14, 15, 16) durch die Existenz eines abgeernteten Bereichs (22) definiert ist, und/oder, dass die Evidenzkarten-Eigenschaft einer Evidenzkarte (14, 15, 16) durch die Existenz einer Bestandskante (23) definiert ist.

7. Verfahren nach einem der vorhergehenden Ansprüche, **dadurch gekennzeichnet, dass** das Sensorfusionsmodul (17) die den Gitterelementen (E) jeweils zugeordneten, resultierenden Auftrittswahrscheinlichkeiten aus den sensorspezifischen Auftrittswahrscheinlichkeiten basierend auf dem Bayesschen Ansatz zur statistischen Datenanalyse erzeugt.

8. Verfahren nach einem der vorhergehenden Ansprüche, **dadurch gekennzeichnet, dass** für den relevanten Umfeldbereich eine Schlagdatenbank definiert ist, die eine Mehrzahl von den relevanten Umfeldbereich definierenden Schlagdaten aufweist und dass ein Teil der Evidenzkarten (14, 15, 16) in der Schlagdatenbank gespeichert wird.

9. Verfahren nach einem der vorhergehenden Ansprüche, **dadurch gekennzeichnet, dass** das Fahrerassistenzsystem (9) eine Mensch-Maschine-Schnittstelle (24) aufweist und dass eine Steueraktion die Ausgabe der Evidenzkarten (14, 15, 16) über die Mensch-Maschine-Schnittstelle (24) und/oder in Abhängigkeit vom Dateninhalt der Evidenzkarte (14, 15, 16) die Ausgabe einer Warnmeldung über die Mensch-Maschine-Schnittstelle (24) ist.

10. Verfahren nach einem der vorhergehenden Ansprüche, **dadurch gekennzeichnet, dass** für den Fall, dass die Evidenzkarte (14, 15,1 16) im zukünftigen Fahrweg (25) der Arbeitsmaschine (1) ein Hindernis mit einer Auftrittswahrscheinlichkeit, die oberhalb einer Grenz-Auftrittswahrscheinlichkeit liegt, aufweist, die Steueraktion des Fahrerassistenzsystems (9) die Durchführung einer Notroutine ist, vorzugsweise, dass die Notroutine eine Stopproutine zum Anhalten der Arbeitsmaschine (1) und/oder eine Ausweichroutine zum Ausweichen der Arbeitsmaschine (1) vor dem Hindernis umfasst.

11. Selbstfahrende landwirtschaftliche Arbeitsmaschine, **dadurch gekennzeichnet, dass** die Arbeitsmaschine zur Durchführung eines Verfahrens nach einem der vorhergehenden Ansprüche vorgesehen und eingerichtet ist.

12. Selbstfahrende landwirtschaftliche Arbeitsmaschine nach Anspruch 11, **dadurch gekennzeichnet, dass** das Sensorfusionsmodul (17) von dem Fahrerassistenzsystem (9) der Arbeitsmaschine (1) bereitgestellt wird.

## Claims

1. A method of operating a self-propelled agricultural working machine (1) comprising at least one working member (3-8) and a driver assist system (9) for generating control actions within the working machine (1), wherein there is provided a sensor arrangement (10) for generating surroundings information, wherein the driver assist system (9) generates the control actions based on the surroundings information, wherein the sensor arrangement (10) has at least two sensor systems (11, 12) which respectively generate sensor information in relation to a predetermined relevant surroundings region (13) of the working machine (1),
**characterised in that**
at least one evidence card (14, 15, 16) is defined by data technology, with which there is associated an evidence card property characterising the surroundings of the working machine (1), that the relevant surroundings region (13) of the working machine (1) is mapped in the evidence card (14, 15, 16) by means of a grid plane (P) of grid elements (E),
occurrence probabilities which are sensor-specific considered in themselves for the presence of the evidence card property in the grid elements (E) of the evidence card (14, 15, 16) are respectively ascertained from the sensor information of at least two sensor systems (11, 12), and
there is provided a sensor fusion module (17) which for the grid elements (E) of the evidence card (14, 15, 16) respectively ascertains from the sensor-specific occurrence probabilities a resulting occurrence probability for the respective grid element (E).

2. A method according to claim 1 **characterised in that** at least two evidence cards (14, 15, 16) are defined, with which there is respectively associated an evidence card property characterising the surroundings of the working machine (1), preferably there are provided more than three evidence cards (14, 15, 16), with which there are respectively associated an evidence card property characterising the surroundings of the working machine (1).

3. A method according to claim 1 or claim 2 **characterised in that** at least two of the sensor systems (11, 12) detect physical properties of the relevant surroundings region of the working machine (1).

4. A method according to one of the preceding claims **characterised in that** a first sensor system (11) of the sensor arrangement (10) includes at least one camera sensor, in particular a colour camera sensor, and that a second sensor system (12) of the sensor arrangement (10) includes a Lidar sensor, in particular a laser-based Lidar sensor.

5. A method according to one of the preceding claims **characterised in that** the detection regions (11b, 12b) at least of a part of the sensor systems (11, 12) overlap for at least a part of the grid elements (E) of the grid plane (P).

6. A method according to one of the preceding claims **characterised in that** the evidence card property of an evidence card (14, 15, 16) is defined by the existence of crop stand (19) to be harvested and/or that the evidence card property of an evidence card (14, 15, 16) is defined by the existence of standing crop stand (20) and/or that the evidence card property of an evidence card (14, 15, 16) is defined by the existence of a living obstacle (18) and/or that the evidence card property of an evidence card (14, 15, 16) is defined by the existence of a non-living obstacle and/or that the evidence card property of an evidence card (14, 15, 16) is defined by the existence of a tramline (21) and/or that the evidence card property of an evidence card (14, 15, 16) is defined by the existence of a harvested region (22) and/or that the evidence card property of an evidence card (14, 15, 16) is defined by the existence of a stand edge (23).

7. A method according to one of the preceding claims **characterised in that** the sensor fusion module (17) generates the resulting occurrence probabilities respectively associated with the grid elements (E) from the sensor-specific occurrence probabilities based on the Bayesian approach to statistical data analysis.

8. A method according to one of the preceding claims **characterised in that** there is defined for the relevant surroundings region a field database which has a plurality of field data defining the relevant surroundings region and that a part of the evidence cards (14, 15, 16) is stored in the field database.

9. A method according to one of the preceding claims **characterised in that** the driver assist system (9) has a man-machine interface (24) and that a control action is the output of the evidence cards (14, 15, 16) by way of the man-machine interface (24) and/or in dependence on the data content of the evidence card (14, 15, 16) the output of a warning message by way of the man-machine interface (24).

10. A method according to one of the preceding claims **characterised in that** for the situation where the evidence card (14, 15, 16) in the future travel path (25) of the working machine (1) has an obstacle with an occurrence probability which is above a limit occurrence probability the control action of the driver assist system (9) is implementation of an emergency routine, and preferably that the emergency routine includes a stop routine for stopping the working machine (1) and/or an evasion routine for the working machine to take evasive action before the obstacle.

11. A self-propelled agricultural working machine **characterised in that** the working machine is provided and adapted for carrying out a method according to one of the preceding claims.

12. A self-propelled agricultural working machine according to claim 11 **characterised in that** the sensor fusion module (17) is provided by the driver assist system (9) of the working machine (1).

## Revendications

1. Procédé de fonctionnement d'une machine de travail agricole automotrice (1) comprenant au moins un organe de travail (3-8) et comprenant un système d'assistance à la conduite (9) pour générer des actions de commande à l'intérieur de la machine de travail (1), un agencement de capteur (10) étant prévu pour générer des informations d'environnement, le système d'assistance à la conduite (9) générant les actions de commande sur la base des informations d'environnement, l'agencement de capteur (10) comportant au moins deux systèmes de capteur (11, 12) qui génèrent respectivement des informations de capteur sur une zone d'environnement prédéterminée, pertinente (13) de la machine de travail (1), **caractérisé en ce que** sur le plan des données est définie au moins une carte d'évidences (14, 15, 16) à laquelle est associée une propriété de carte d'évidences caractérisant l'environnement de la machine de travail (1), de façon que, dans la carte d'évidences (14, 15, 16), la zone d'environnement pertinente (13) de la machine de travail (1) soit représentée au moyen d'un plan en grille (P) constitué d'éléments de grille (E), **en ce qu'**à partir des informations de capteur d'au moins deux systèmes de capteur (11, 12) sont déterminées respectivement des probabilités d'occurrence, spécifiques en soi aux capteurs, pour la présence d'une propriété de carte d'évidences dans les éléments de grille (E) de la carte d'évidences (14, 15, 16), et **en ce qu'**un module de fusion de capteurs (17) est prévu, lequel détermine pour les éléments de grille (E) de la carte d'évidences (14, 15, 16), respectivement à partir des probabilités d'occurrence spécifiques aux capteurs, une probabilité d'occurrence résultante pour l'élément de grille respectif (E).

2. Procédé selon la revendication 1, **caractérisé en ce que** sont définies au moins deux cartes d'évidences (14, 15, 16) auxquelles est associée respectivement une propriété de carte d'évidences caractérisant l'environnement de la machine de travail (1), de préférence **en ce que** sont prévues de préférence plus de trois cartes d'évidences (14, 15, 16) auxquelles sont associées respectivement une propriété de carte d'évidences caractérisant l'environnement de la machine de travail (1).

3. Procédé selon la revendication 1 ou 2, **caractérisé en ce qu'**au moins deux des systèmes de capteur (11, 12) détectent des propriétés physiques différentes de la zone d'environnement pertinente de la machine de travail (1).

4. Procédé selon une des revendications précédentes, **caractérisé en ce qu'**un premier système de capteur (11) de l'agencement de capteur (10) inclut au moins un capteur de caméra, en particulier un capteur de caméra couleur, et **en ce qu'**un deuxième système de capteur (12) de l'agencement de capteur (10) inclut un capteur lidar, en particulier un capteur lidar à laser.

5. Procédé selon une des revendications précédentes, **caractérisé en ce que** les zones de détection (11b, 12b) au moins d'une partie des systèmes de capteur (11, 12) se chevauchent pour au moins une partie des éléments de grille (E) du plan en grille (P).

6. Procédé selon une des revendications précédentes, **caractérisé en ce que** la propriété de carte d'évidences d'une carte d'évidences (14, 15, 16) est définie par l'existence de culture de produit à récolter (19), et/ou **en ce que** la propriété de carte d'évidences d'une carte d'évidences (14, 15, 16) est définie par l'existence de culture de produit sur pied (20), et/ou **en ce que** la propriété de carte d'évidences d'une carte d'évidences (14, 15, 16) est définie par l'existence d'un obstacle vivant (18), et/ou **en ce que** la propriété de carte d'évidences d'une carte d'évidences (14, 15, 16) est définie par l'existence d'un obstacle non vivant, et/ou **en ce que** la propriété de carte d'évidences d'une carte d'évidences (14, 15, 16) est définie par l'existence d'une allée de roulement (21), et/ou **en ce que** la propriété de carte d'évidences d'une carte d'évidences (14, 15, 16) est définie par l'existence d'une zone récoltée (22), et/ou **en ce que** la propriété de carte d'évidences d'une carte d'évidences (14, 15, 16) est définie par l'existence d'un bord de culture (23).

7. Procédé selon une des revendications précédentes, **caractérisé en ce que** le module de fusion de capteurs (17) génère les probabilités d'occurrence résultantes, associées respectivement aux éléments de grille (E), à partir des probabilités d'occurrence spécifiques aux capteurs sur la base de l'approche bayésienne de l'analyse statistique de données.

8. Procédé selon une des revendications précédentes, **caractérisé en ce que** pour la zone d'environnement pertinente est définie une banque de données de parcelles qui comporte une pluralité de données de parcelles définissant la zone d'environnement pertinente, et **en ce qu'**une partie des cartes d'évidences (14, 15, 16) est mémorisée dans la banque de données de parcelles.

9. Procédé selon une des revendications précédentes, **caractérisé en ce que** le système d'assistance à la conduite (9) comporte une interface homme-machine (24), et **en ce qu'**une action de commande est l'affichage des cartes d'évidences (14, 15, 16) par l'intermédiaire de l'interface homme-machine (24) et/ou, en fonction du contenu des données de la carte d'évidences (14, 15, 16), est l'affichage d'un message d'alerte par l'intermédiaire de l'interface homme-machine (24).

10. Procédé selon une des revendications précédentes, **caractérisé en ce que**, pour le cas où la carte d'évidences (14, 15, 16) comporte dans le trajet de déplacement à venir (25) de la machine de travail (1) un obstacle avec une probabilité d'occurrence qui est supérieure à une probabilité d'occurrence limite, l'action de commande du système d'assistance à la conduite (9) est l'exécution d'une routine d'urgence, de préférence **en ce que** la routine d'urgence inclut une routine d'arrêt pour immobiliser la machine de travail (1) et/ou une routine d'effacement pour l'effacement de la machine de travail (1) devant l'obstacle.

11. Machine de travail agricole automotrice, **caractérisée en ce que** la machine de travail est prévue et agencée pour exécuter un procédé selon une des revendications précédentes.

12. Machine de travail agricole automotrice selon la revendication 11, **caractérisée en ce que** le module de fusion de capteurs (17) est fourni par le système d'assistance à la conduite (9) de la machine de travail (1) .
